# EUROPÄISCHE PATENTSCHRIFT

(11) **EP 0 689 054 B1**
(45) Veröffentlichungstag und Bekanntmachung des Hinweises auf die Patenterteilung: **06.10.1999**
(21) Anmeldenummer: 95107905.2
(22) Anmeldetag: 24.05.1995
(51) Int. Cl.: G01P 3/48

(54) **Verfahren und Einrichtung zur Drehzahlmessung eines mechanisch kommutierten Gleichstrommotors**
Method and apparatus for counting revolutions of a mechanically commutated dc-motor
Procédé et dispositif pour la mesure du nombre de tours d'un moteur à courant continu avec une commutation mécanique

(30) Priorität: 24.06.1994 DE 4422083
(43) Veröffentlichungstag der Anmeldung: 27.12.1995
(73) Patentinhaber: ROBERT BOSCH GMBH, 70442 Stuttgart (DE)
(72) Erfinder: Bertolini, Thomas, Dr. Ing., D-77866 Rheinau (DE); Reichmann, Siegfried, Dipl.-Ing. (FH), D-77866 Rheinau (DE); Moench, Wolfgang, D-76530 Baden-Baden (DE)

(56) Entgegenhaltungen:
- EP-A- 0 052 256
- EP-A- 0 333 572
- US-A- 3 675 126
- US-A- 3 736 435

## Beschreibung

### Stand der Technik

Die Erfindung geht aus von einem Verfahren zur Drehzahl- und/oder Wegstreckenmessung eines mechanisch kommutierten Gleichstrommotors der im Oberbegriff des Anspruchs 1 definierten Gattung, sowie einer Einrichtung der im Oberbegriff des Anspruchs 4 definierten Gattung, insbesondere zur Durchführung des Verfahrens nach Anspruch 1.

Es ist allgemein bekannt, den Wechselanteil des Stromes ("Welligkeit") von Gleichstrommotoren als Maß für die Drehzahl des Motors zu erfassen, auszuwerten und auszunutzen. Dabei gibt es zwei Verfahren. Bei dem ersten Verfahren, dem sogenannten Nulldurchgangsverfahren, verläuft das Stromwelligkeitssignal im Mittel glatt und nach Elimination des Gleichstromanteils werden die Nulldurchgänge erfaßt. Ein Beispiel dafür ist in der DE 35 27 906 A1 beschrieben.

Bei dem zweiten Verfahren, dem sogenannten ripple-count-Verfahren, verläuft das Signal wegen ungleicher Teilspulen auf Grund von Fertigungstoleranzen mit einer niederfrequenten Modulation, zusätzlich zur höherfrequenten Welligkeit. Es ergeben sich dabei lokale Minima und Maxima, bei denen Minima absolut höhere Werte als Maxima aufweisen können. Daher ist eine lokale Erfassung mittels eines aufwendigen, differenzierenden Verfahrens erforderlich.

Es ist auch bekannt, wie in einem Aufsatz "Unkonventionelle Drehzahlmessung und -regelung bei Gleichstrommotoren" von M. Birk, Elektronik 25/14.12.1984, S. 71, 72, beschrieben, die Drehzahl inkremental aus der Kommutierungswelligkeit des Ankerstroms zu bestimmen. Dazu wird eine an einem Meßwiderstand im Motorstromkreis abfallende Spannung über einen Kondensator kapazitiv ausgekoppelt und einem Filter zugeführt. Das Filter wird dabei adaptiv über den ganzen Drehzahlbereich mitgefahren, d. h. die Eckfrequenzen sind drehzahlabhängig veränderbar. Am Ausgang des Filters steht die aus der Kommutierungswelligkeit ausgefilterte Grundschwingung zur Verfügung. Die Frequenz dieses Signals ist proportional zur Drehzahl. Es ist hier ein erheblicher schaltungstechnischer Aufwand notwendig.

### Vorteile der Erfindung

Das erfindungsgemäße Verfahren bzw. die erfindungsgemäße Einrichtung mit den kennzeichnenden Merkmalen des Anspruchs 1 bzw. 4 hat demgegenüber den Vorteil des geringeren Aufwandes schaltungstechnischer und kostenmäßiger Art. Darüber hinaus bietet die Erfindung eine zuverlässige Erfassung und Signalaufbereitung der Stromwelligkeit, ohne zu fehlerbehafteten Ergebnissen aufgrund stark variierender spektraler Zusammensetzung des auszuwertenden Signals zu führen. Durch die besondere Art der Signalerfassung und Signalaufbereitung gemäß vorliegender Erfindung, die ein fehlerfreies Signal liefert, kann die Signalauswertung mit besonders einfachen und herkömmlichen Mitteln durchgeführt werden.

In vorteilhafter Weise wird bei dem erfindungsgemäßen Verfahren das Meßobjekt Motor gleichstrommäßig an die Schaltung zur Erfassung der Welligkeit des Motorstroms und der Schaltung zur Generierung des Stromwelligkeitssignals angeschlossen. Das bei der Erfassung erzeugte Signal der Welligkeit des Motorstroms wird zu einem identischen, jedoch in der Phase verschobenen Signal addiert. Das so entstandene fehlerfreie Stromwelligkeitssignal kann dann hinsichtlich seiner Frequenz drehzahlrelevant ausgewertet werden.

Durch die in den weiteren abhängigen Ansprüchen aufgeführten Maßnahmen sind vorteilhafte Weiterbildungen und Ausgestaltungen des im Anspruch 1 angegebenen Verfahrens bzw. der im Anspruch 4 angegebenen Einrichtung zur Erfassung und Signalaufbereitung der Welligkeit des Motorstroms eines mechanisch kommutierten Gleichstrommotors möglich.

Bei dem erfindungsgemäßen Verfahren erfolgt die Auswertung des durch Addition entstandenen Stromwelligkeitssignals vorteilhafterweise hinsichtlich seiner Nulldurchgänge, wobei in zweckmäßiger Weiterbildung die Nulldurchgänge mittels einer Komparatorschaltung analog oder mit Hilfe elektronischer Schaltkreise digital erfaßt werden.

Die gemäß der Erfindung gestaltete Einrichtung zur Erfassung und Signalaufbereitung des Stromes, welcher bei der Kommutierung des Motorstroms eines Gleichstrommotors entsteht, sieht zur gleichstrommäßigen Erfassung einen Meßwiderstand im Motorstromkreis vor, dessen Spannung einem ersten Verstärker zugeführt wird. Die erzeugte Ausgangsspannung wird mit Hilfe eines zweiten Verstärkers und eines Siebglieds weiter aufbereitet. Mit Hilfe eines Analogaddierers wird aus dem aufbereiteten und einem mittels eines Phasenschiebers in der Phase verschobenen identischen Signals das fehlerfreie Stromwelligkeitssignal erzeugt, welches dann drehzahlrelevant ausgewertet werden kann.

In zweckmäßiger Ausgestaltung ist der Phasenschieber als Allpass ausgeführt und vorteilhafterweise derart dimensioniert, daß die Phasenverschiebung auf denjenigen Motor-Arbeitspunkt optimal eingestellt ist, bei dem Fehler, insbesondere durch Doppelkommutierung hervorgerufen, die größte Auswirkung haben.

Gemäß einer besonders vorteilhaften Ausgestaltung der Erfindung ist der Analogaddierer aus einem Verstärker und drei in verschiedenen Zuleitungen des Additionseingangs angeordneten Widerständen gebildet.

Zweckmäßig ist die Verwendung von Instrumentenverstärkern mit hohem Eingangs- und niedrigem Ausgangswiderstand für die vorgesehenen Verstärker.

### Zeichnung

Die Erfindung ist anhand eines in der Zeichnung dargestellten Ausführungsbeispiels in der nachfolgenden Beschreibung näher erläutert. Es zeigen:
- Fig. 1: schematisch ein Blockschaltbild der erfindungsgemäß gestalteten Einrichtung zur Erfassung und Signalaufbereitung des Stroms, welcher bei der Kommutierung des Motorstroms eines Gleichstrommotors entsteht, die besonders geeignet zur Durchführung des erfindungsgemäßen Verfahrens ist;
- Fig. 2: schematisch ein zeitabhängiges Diagramm der durch Kommutierung modulierten Meßspannung nach Erfassung und Verstärkung;
- Fig. 3: schematisch ein zeitabhängiges Diagramm der durch ein Siebglied geglätteten Meßspannung nach Fig. 2;
- Fig. 4: schematisch ein zeitabhängiges Diagramm des verstärkten Differenzsignals, das durch die Subtraktion der Spannung nach Fig. 2 von der Spannung nach Fig. 3 entsteht und keine Gleichanteile mehr enthält;
- Fig. 5: schematisch ein zeitabhängiges Diagramm einer durch Doppelkommutierung fehlerbehafteten Meßspannung;
- Fig. 6: schematisch in Zeitabhängigkeit einen Ausschnitt der Fehlerstelle gemäß Fig. 5 in normaler und phasenverschobener Darstellung, und
- Fig. 7: schematisch in Zeitabhängigkeit das Ergebnis der Addition der beiden in Fig. 6 dargestellten Signalspannungsverläufe.

### Beschreibung des Ausführungsbeispiels

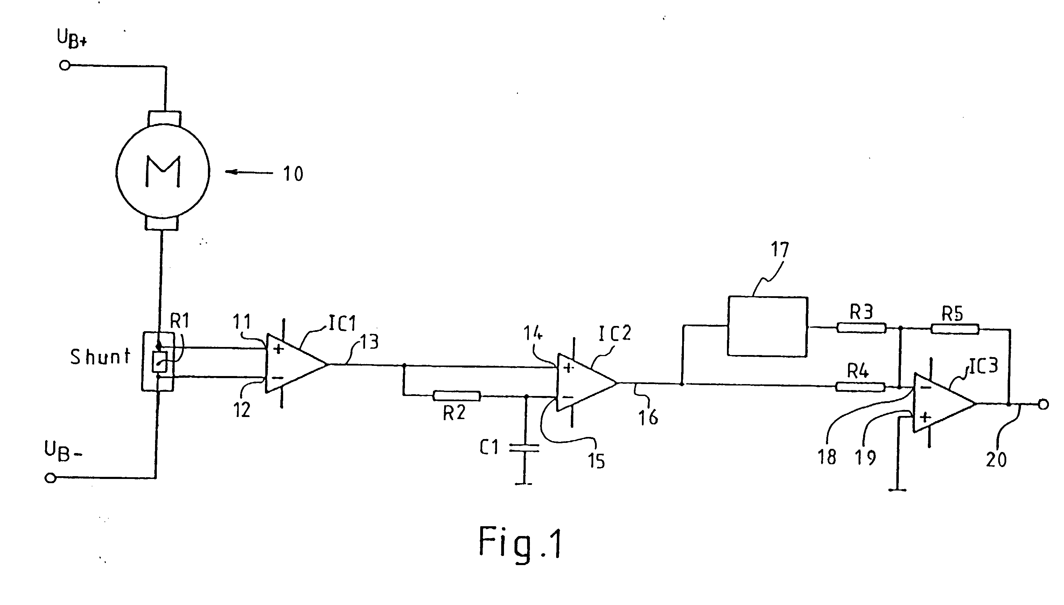

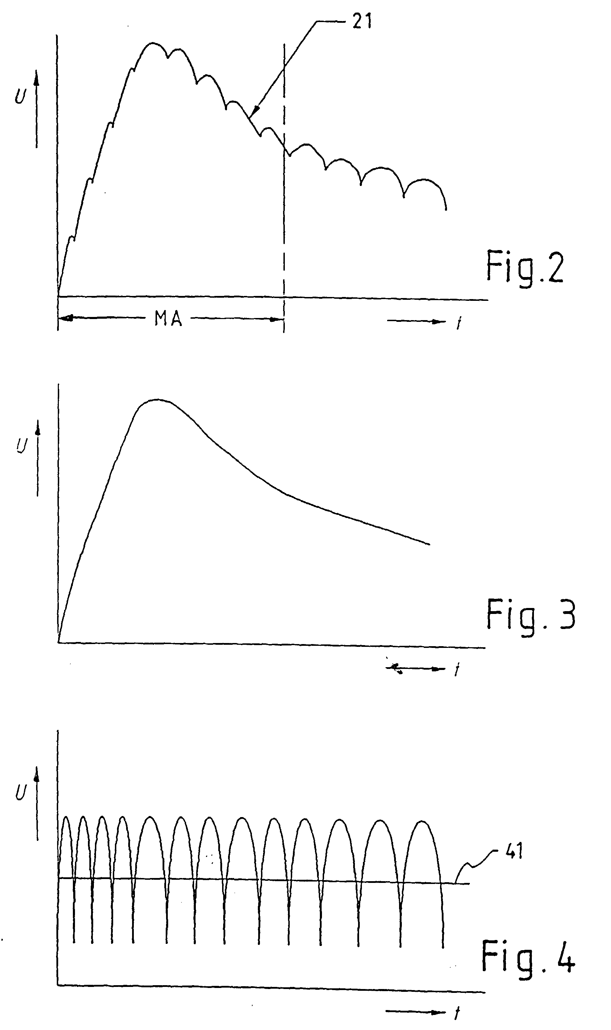

In Fig. 1 ist schematisch ein Blockschaltbild der erfindungsgemäß gestalteten Einrichtung zur Erfassung und Signalaufbereitung des Stroms dargestellt, der bei der Kommutierung des Motorstroms eines Gleichstrommotors entsteht. Der Gleichstrommotor 10 ist mit seinem Stator zwischen die Anschlüsse Ub₊ und Ub₋ einer Spannungsquelle geschaltet. In die Verbindungsleitung zwischen Motor 10 und dem Anschluß Ub₋ ist ein Meßwiderstand R1 eingeschaltet. Dieser Meßwiderstand R1 kann Teil einer nicht näher dargestellten Shunt-Vorrichtung sein. Die über dem Meßwiderstand R1 abgenommene Spannung wird auf die beiden Eingänge 11 und 12 eines ersten Verstärkers IC1 gegeben. Diese beiden Eingänge 11 und 12 sind der positiv gekennzeichnete, nichtinvertierende bzw. der negativ gekennzeichnete, invertierende Eingang des ersten Verstärkers IC1. Damit wird die zwischen diesen beiden Eingängen 11, 12 liegende Differenzspannung vom ersten Verstärker IC1 verstärkt. Die am Ausgang 13 anstehende Spannung ist in Fig. 2 in einem Diagramm zeitabhängig schematisch dargestellt. Sie zeigt durch Kommutierung bedingte Modulation 21, aus der die Welligkeitssignale gewonnen werden, sowie den erst ansteigenden und dann abfallenden Verlauf während des mit MA bezeichneten Bereichs des Motoranlaufs.

Der aus Meßwiderstand R1 und erstem Verstärker IC1 bestehende Teil der Schaltung dient der gleichstrommäßigen Erfassung und der Verstärkung des Signals der Stromwelligkeit sowie der gleichstrommäßigen Ankopplung des das Meßobjekt bildenden Motors 10 an die Erfassungs- und Meßeinrichtung.

Zur weiteren Aufbereitung wird das am Ausgang 13 des ersten Verstärkers IC1 anstehende Signal einem aus einem zweiten Verstärker IC2 sowie aus einem aus einem Widerstand R2 und einem Kondensator C1 bestehenden Siebglied aufgebauten Aufbereitungsteil der Schaltung zugeführt. So wird dem positiv gekennzeichneten, nichtinvertierenden Eingang 14 des zweiten Verstärkers IC2, das Ausgangssignal 13 direkt zugeführt. Dem negativ gekennzeichneten, invertierenden Eingang 15 des zweiten Verstärkers IC2 wird das Signal 13 über den Siebwiderstand R2 zugeführt. Gleichzeitig ist dieser Eingang 15 mit dem Siebkondensator C1 verbunden, der an seiner anderen Seite an Masse liegt. Der zweite Verstärker IC2 subtrahiert und verstärkt die an seinen Eingängen 14 und 15 anliegenden Spannungen voneinander. Dies sind die in Fig. 2 schematisch in Zeitabhängigkeit dargestellte durch Kommutierung modulierte Spannung und die durch das entsprechend ausgelegte und dimensionierte Siebglied R1, C1 geglättete modulierte Spannung, wie sie im Diagramm der Fig. 3 schematisch in Zeitabhängigkeit dargestellt ist.

Am Ausgang 16 des zweiten Verstärkers IC2 bzw. dem Aufbereitungsteil der Schaltung, liegt somit eine verstärkte Signalspannung an, deren Verlauf in Fig. 4 in einem Zeitdiagramm schematisch dargestellt ist. Der Verstärker IC2 subtrahiert die in Fig. 2 und 3 dargestellten Signale und die Amplitude des verstärkten Differenzsignals am Ausgang 16 entspricht der Stromwelligkeit. Das Signal enthält keine durch den Motorstrom entstandene Gleichspannungsanteile und folgt einem periodischen Verlauf mit Nulldurchgängen gegenüber der mit 41 bezeichneten Nullinie, die einen Triggerpegel darstellt. Damit kann eine Auswertung unter Anwendung einfacher Mittel, z. B. einer einfachen Komparatorschaltung, erfolgen. Das aus dem Widerstand R2 und dem Kondensator C1 bestehende Siebglied kann bei großer Verstärkung als Tiefpass mit hoher Grenzfrequenz dimensioniert werden. Damit wird die Stromwelligkeit auch bei schnellen Änderungen des Motorstroms, wie beispielsweise beim Motoranlauf im Bereich MA der Fig. 2 dargestellt, im Gegensatz zur Ankopplung über einen Hochpass zuverlässig erfaßt.

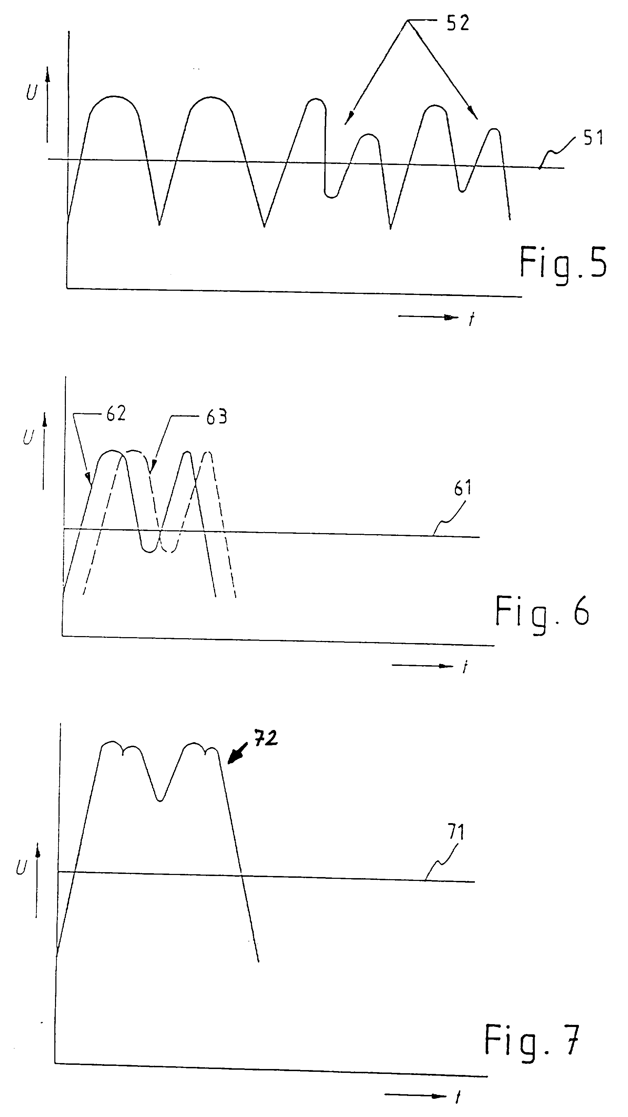

In Fig. 5 ist schematisch ein zeitabhängiges Diagramm einer durch Doppelkommutierung fehlerbehafteten Meßspannung dargestellt. Der Darstellungsmaßstab gegenüber der Darstellung von Fig. 4 ist vergrößert, um die durch Doppelkommutierung 52 zusätzlich entstehenden, an der als Triggerpegel dienenden Nullinie 51 auftretenden Nulldurchgänge besser erkennen zu können. Die Doppelkommutierung tritt durch den Versatz der Bürsten und des Ankers durch Fertigungstoleranzen bei bestimmten Arbeitspunkten, z.B. hoher Last bei kleiner Drehzahl, auf. Unterschreitet der Signaleinbruch die Nullinie 51 und erfolgt die Auswertung aufgrund der Nulldurchgänge, beispielsweise mittels eines Komparators, so führt dies zu Fehlzählungen.

Zur Ausblendung solcher fehlerbehafteter Signale, die durch Doppelkommutierung 52 entstehen und zu Fehlzählungen bei der Auswertung führen können, sind erfindungsgemäß ein Phasenschieber 17 und eine Analogaddierer-Schaltung, bestehend aus IC3, R3, R4 und R5 vorgesehen, um ein normales und ein in der Phase verschobenes, fehlerbehaftetes Signal analog zu addieren.

In Fig. 6 ist schematisch in Zeitabhängigkeit ein Ausschnitt der Fehlerstelle gemäß Fig. 5 dargestellt, und zwar in durchgezogener Linie mit 62 bezeichnet in normaler und in gestrichelter Linie mit 63 bezeichnet in phasenverschobener Darstellung. Gemäß der Erfindung wird zu dem mit dem zweiten Verstärker IC2 generierten fehlerbehafteten Signal, das mit 62 bezeichnet ist, das gleiche fehlerbehaftete jedoch in der Phase verschobene Signal 63 analog addiert. Das Ergebnis dieser analogen Addition ist zeitabhängig und schematisch in Fig. 7 dargestellt. Während in Fig. 6 klar erkennbar beide Signale 62 und 63 im mittleren Bereich die Nullinie 61 nach unten hin überqueren, liegt die Amplitude des durch Addition entstandenen und in Fig. 7 dargestellten Signals 72 in demselben mittleren Bereich eindeutig oberhalb der Nullinie 71. Ein nachgeschalteter Komparator triggert daher nicht auf das fehlerbehaftete Signal und somit ist eine Fehlzählung vermieden.

Wie in Fig. 1 dargestellt, ist erfindungsgemäß der Phasenschieber 17 an den Ausgang 16 des zweiten Verstärkers IC2 angeschlossen. Der Ausgang des Phasenschiebers 17 ist über einen Widerstand R3 auf den negativ gekennzeichneten, invertierenden Eingang 18 eines dritten Verstärkers IC3 geführt. Diesem Eingang 18 wird das phasenverschobene Signal 63 (Fig. 6) zugeführt. Gleichfalls wird diesem Eingang 18 das nicht in der Phase verschobene Signal 62 (Fig. 6) über einen Widerstand R4 vom Ausgang 16 des zweiten Verstärkers IC2 zugeführt. Der zweite, positiv gekennzeichnete, nichtinvertierende Eingang 19 des dritten Verstärkers IC3 ist mit Masse verbunden. Der Ausgang 20 des dritten Verstärkers IC3 ist über einen Widerstand R5 auf den Eingang 18 rückgeführt. Gleichzeitig steht an diesem Ausgang 20 das zur weiteren Auswertung erfindungsgemäß aufbereitete Stromwelligkeitssignal an. Die in den Zuleitungen zum Eingang 18 des dritten Verstärkers IC3 liegenden Widerstände R3, R4 und R5 sowie der dritte Verstärker IC3 selbst bilden den Analogaddierer gemäß dem Verfahren und des Einrichtung der vorliegenden Erfindung.

Der Phasenschieber 17 ist vorzugsweise als Allpass ausgeführt. Da das Verhalten des Allpasses in Abhängigkeit von der Betriebsfrequenz nicht linear ist, wird bevorzugt die Dimensionierung des Allpasses so abgestimmt, daß die gewünschte Phasenverschiebung bei demjenigen Motor-Arbeitspunkt optimal eintritt, bei dem der insbesondere durch Doppelkommutierung auftretende Fehler die größte Auswirkung hat.

Als Verstärker IC1, IC2 und IC3 werden bevorzugt Instrumentenverstärker verwendet. Dies sind spezielle Operationsverstärker. Sie haben einen hohen Eingangswiderstand, um die Meßquelle möglichst gering zu belasten, und einen niedrigen Ausgangswiderstand.

Durch das durch die Erfindung bereitgestellte Verfahren und durch die dazu vorgesehene Einrichtung werden Fehler durch Störsignale, besonders bei Motoranlauf oder bei Motorbetrieb unter Last, in der Erfassung und Signalaufbereitung der Stromwelligkeit eliminiert. Dadurch ist die insbesondere auf der Auswertung von Nulldurchgängen beruhende Signalauswertung erheblich störsicherer gemacht. Dies ist von besonderem Vorteil und Wert bei Anwendung des Verfahrens zur Messung von Verstellwegen.

## Patentansprüche

1. Verfahren zur Drehzahl- und/oder Wegstreckenmessung eines mechanisch kommutierten Gleichstrommotors (10), bei dem die Welligkeit des Stroms, die bei der Kommutierung des Motorstroms des Gleichstrommotors (10) entsteht, mit Hilfe einer elektronischen Schaltung (R1, R2, R3, R4, R5, IC1, IC2, IC3, 17, C1) erfaßt wird und die Frequenz der Welligkeit als ein Maß für die Drehzahl ausgewertet wird, dadurch gekennzeichnet, daß zur Erfassung und Signalaufbereitung die Ankopplung des das Meßobjekt bildenden Motors (10) an die, und die Generierung der Stromwelligkeit für die, Erfassungs- und Meßeinrichtung über einen Gleichstrompfad erfolgt,
daß das dabei durch Subtraktion eines geglätteten Signals von einem modulierten Signal generierte Signal (16) der Stromwelligkeit in der Phase verschoben wird,
daß das phasenverschobene und das nicht-phasenverschobene Signal (16) der Stromwelligkeit analog zu einander addiert werden, und
daß das so entstandene aufbereitete Stromwelligkeitssignal hinsichtlich seiner Frequenz ausgewertet wird.

2. Verfahren nach Anspruch 1, dadurch gekennzeichnet, daß die Auswertung des durch Addition entstandenen Stromwelligkeitssignals hinsichtlich seiner Nulldurchgänge erfolgt.

3. Verfahren nach Anspruch 2, dadurch gekennzeichnet, daß die Nulldurchgänge mittels einer Komparatorschaltung analog oder mit Hilfe elektronischer Schaltkreise digital erfaßt werden.

4. Einrichtung zur Erfassung und Signalaufbereitung des Stroms, der bei der Kommutierung des Motorstroms eines Gleichstrommotors entsteht, insbesondere zur Drehzahl- und/oder Wegstreckenmessung des Gleichstrommotors und zur Durchführung des Verfahrens nach einem der vorigen Ansprüche, mit einer elektronischen Schaltung zur Erfassung der Welligkeit und zur drehzahl-relevanten Auswertung der Frequenz der Welligkeit,
dadurch gekennzeichnet, daß
a) im Stromkreis des Motors (10) ein Meßwiderstand (R1) vorgesehen ist,
b) die über dem Meßwiderstand (Rl) abfallende Spannung auf die beiden Eingänge (11, 12) eines ersten Verstärkers (IC1), vorzugsweise eines Differenzverstärkers, geführt ist,
c) das Ausgangssignal (13) des ersten Verstärkers (IC1) direkt auf einen ersten Eingang (14) eines zweiten Verstärkers (IC2) und über ein Siebglied (R2, C1), vorzugsweise ein aus einem Widerstand (R2) und einem Kondensator (C1) bestehendes RC-Glied, indirekt auf den zweiten Eingang (15) des zweiten Verstärkers (IC2) geführt ist, und
d) das Ausgangssignal (16) des zweiten Verstärkers (IC2) und das über einen Phasenschieber (17) phasenverschobene Ausgangssignal (16) des zweiten Verstärkers (IC2) in einem Analogaddierer einem Ausgang (20) der Signalaufbereitung zugeführt ist addiert und dessen Ausgangssignal als aufbereitetes, zur drehzahl-relevanten Auswertung geeignetes, Stromwelligkeitssignal.

5. Einrichtung nach Anspruch 4, dadurch gekennzeichnet, daß der Phasenschieber (17) als Allpass ausgeführt ist.

6. Einrichtung nach Anspruch 5, dadurch gekennzeichnet, daß der als Allpass ausgeführte Phasenschieber (17) derart dimensioniert ist, daß die Phasenverschiebung auf denjenigen Motor-Arbeitspunkt optimal eingestellt ist, bei dem der durch Doppelkommutierung hervorgerufene Fehler die größte Auswirkung hat.

7. Einrichtung nach einem der Ansprüche 4 bis 6, dadurch gekennzeichnet, daß der Analogaddierer durch einen dritten Verstärker (IC3) und in den Zuleitungen vor dem Additions-/Subtraktionsseingang (18) angeordnete Widerstände (R3, R4, und R5) gebildet wird.

8. Einrichtung nach einem der Ansprüche 4 bis 7, dadurch gekennzeichnet, daß als Verstärker (IC1, IC2, IC3) Instrumentenverstärker mit hohem Eingangs- und niedrigem Ausgangswiderstand vorgesehen sind.

## Claims

1. Method for measuring the speed of and/or distance moved by a mechanically commutated DC motor (10), in which the current ripple produced during the commutation of the current of the DC motor (10) is detected with the aid of an electronic circuit (R1, R2, R3, R4, R5, IC1, IC2, IC3, 17, C1) and the frequency of the ripple is evaluated as a measure of the speed, characterized in that, for the purpose of detection and signal processing, the coupling of the motor (10), which constitutes the device under test, to the detecting and measuring device, and the generation of the current ripple for the detecting and measuring device are performed via a DC circuit, in that the signal (16), generated in this case by subtracting a smooth signal from a modulated signal, of the current ripple is phase-shifted, in that the phase-shifted and the non-phase-shifted signal (16) of the current ripple are added to one another in analogue fashion, and in that the conditioned current ripple signal thus produced is evaluated with regard to its frequency.

2. Method according to Claim 1, characterized in that the evaluation of the current ripple signal produced by addition is performed with regard to its zero crossings.

3. Method according to Claim 2, characterized in that the zero crossings are detected in analogue fashion by means of a comparator circuit, or in digital fashion with the aid of electronic circuits.

4. Device for detecting and conditioning a signal of the current during commutation of the current of a DC motor, in particular for measuring the speed and/or distance moved of the DC motor, and for carrying out the method according to one of the preceding claims, having an electronic circuit for detecting the ripple and for evaluating the frequency of the ripple in a speed-relevant fashion, characterized in that
a) a measuring shunt (R1) is provided in the motor (10) circuit,
b) the voltage dropping across the measuring shunt (R1) is led to the two inputs (11, 12) of a first amplifier (IC1), preferably a difference amplifier,
c) the output signal (13) of the first amplifier (IC1) is led directly to a first input (14) of a second amplifier (IC2) and indirectly, via a filter element (R2, C1), preferably an RC element consisting of a resistor (R2) and a capacitor (C1), to the second input (15) of the second amplifier (IC2), and
d) the output signal (16) of the second amplifier (IC2) and the output signal (16), phase-shifted via a phase shifter (17), of the second amplifier (IC2) are added in an analogue adder, and the output signal thereof is fed as a conditioned current ripple signal suitable for speed-relevant evaluation to an output (20) of the signal conditioning unit.

5. Device according to Claim 4, characterized in that the phase shifter (17) is designed as an all-pass network.

6. Device according to Claim 5, characterized in that the phase shifter (17) designed as an all-pass network is dimensioned in such a way that the phase shifting is optimally set to that motor operating point at which the error caused by double commutation has the greatest effect.

7. Device according to one of Claims 4 to 6, characterized in that the analogue adder is formed by a third amplifier (IC3) and resistors (R3, R4 and R5) arranged in the supply leads upstream of the addition/subtraction input (18).

8. Device according to one of Claims 4 to 7, characterized in that instrumentation amplifiers with a high input resistance and a low output resistance are provided as amplifiers (IC1, IC2, IC3).

## Revendications

1. Procédé servant à mesurer la vitesse de rotation et/ou le parcours d'un moteur à courant continu (10) à commutation mécanique, dans lequel on détecte l'ondulation du courant qui se produit lors de la commutation du courant du moteur (10) à courant continu, à l'aide d'un circuit électronique (R1, R2, R3, R4, R5, IC1, IC2, IC3, 17, C1), et l'on exploite la fréquence de l'ondulation comme une mesure de la vitesse de rotation,
caractérisé en ce que
• pour détecter et préparer le signal, l'accouplement du moteur (10) qui constitue l'objet de mesure a lieu avec le dispositif de détection et de mesure, et la génération de l'ondulation du courant pour le dispositif de détection et de mesure a lieu au moyen d'un chemin à courant continu,
• le signal de l'ondulation du courant qui est engendré dans ce cas en soustrayant un signal lisse d'un signal modulé, est déphasé,
• le signal déphasé et le signal (16) non déphasé de l'ondulation du courant sont additionnés l'un avec l'autre de façon analogique, et
• le signal de l'ondulation du courant , préparé, ainsi obtenu, est exploité quant à sa fréquence.

2. Procédé selon la revendication 1,
caractérisé en ce que
l'exploitation du signal de l'ondulation du courant obtenu par addition a lieu au moyen de ses passages par zéro.

3. Procédé selon la revendication 2,
caractérisé en ce que
les passages par zéro sont détectés de façon analogique au moyen d'un circuit de comparaison, ou de façon numérique à l'aide de circuits électroniques.

4. Dispositif de détection et de préparation d'un signal de courant qui se produit lors de la commutation du courant d'un moteur à courant continu, en particulier pour mesurer la vitesse de rotation et/ou le parcours du moteur à courant continu, et pour mettre en oeuvre le procédé selon l'une des revendications précédentes, avec un circuit électronique servant à détecter l'ondulation et à exploiter la fréquence de l'ondulation, en ce qui concerne la vitesse de rotation du moteur.
caractérisé en ce que
• a) une résistance de mesure (R1) est prévue dans le circuit du moteur (10),
• b) la tension abaissée au moyen de la résistance de mesure (R1) est amenée aux deux entrées (11, 12) d'un premier amplificateur (IC1), de préférence un amplificateur différentiel,
• c) le signal de sortie (13) du premier amplificateur (IC1) est amené directement à une première entrée (14) d'un deuxième amplificateur (IC2) et, par l'intermédiaire d'un élément de filtrage (R2, C1) qui est de préférence un élément à résistance - condensateur se composant d'une résistance (R2) et d'un condensateur (C1), le signal se sortie est amené indirectement à la deuxième entrée (15) du deuxième amplificateur (IC2), et
• d) le signal de sortie (16) du deuxième amplificateur (IC2) et le signal de sortie (16), déphasé au moyen d'un déphaseur (17), du deuxième amplificateur (IC2) sont additionnés dans un additionneur analogique et son signal de sortie est amené à une sortie (20) de la préparation des signaux en tant que signal d'ondulation du courant préparé qui convient à l'exploitation relative à la vitesse de rotation du moteur,

5. Dispositif selon la revendication 4,
caractérisé en ce que
le déphaseur est réalisé sous la forme d'un élément pour toutes les fréquences.

6. Dispositif selon la revendication 5,
caractérisé en ce que
le déphaseur (17) réalisé sous la forme d'un élément pour toutes les fréquences est dimensionné d'une manière telle que le déphasage soit réglé de façon optimale sur celui des points de fonctionnement du moteur, pour lequel le défaut provoqué par une double commutation a le plus grand impact.

7. Dispositif selon l'une des revendications 4 à 6,
caractérisé en ce que
l'additionneur analogique est formé par un troisième amplificateur (IC3) et par des résistance (R3, R4 et R5) disposées dans les lignes d'arrivée avant l'entrée de l'élément (18) d'addition - soustraction.

8. Dispositif selon l'une des revendications 4 à 7,
caractérisé en ce que
les amplificateurs (IC1, IC2, IC3) sont des amplificateurs d'instruments ayant une résistance d'entrée élevée et une résistance de sortie basse.
